# EUROPEAN PATENT SPECIFICATION

(11) **EP 3 557 819 B1**
(45) Date of publication and mention of the grant of the patent: **28.10.2020**
(21) Application number: 18869459.0
(22) Date of filing: 24.05.2018
(51) Int. Cl.: H04L 12/24, G06F 11/00, G06F 11/07, G06F 11/30, G06F 11/34

(54) **SERVER FAILURE DETECTION METHOD AND SYSTEM**
VERFAHREN UND SYSTEM ZUR ERKENNUNG EINES SERVERFEHLERS
PROCÉDÉ ET SYSTÈME DE DÉTECTION DE DÉFAILLANCE DE SERVEUR

(30) Priority: 09.03.2018 CN 201810193351
(43) Date of publication of application: 23.10.2019
(73) Proprietor: Wangsu Science & Technology Co., Ltd., Shanghai 200030 (CN)
(72) Inventor: WU, Wenjie, Shanghai 200030 (CN); YU, Jianzhan, Shanghai 200030 (CN); LI, Jie, Shanghai 200030 (CN)
(74) Representative: de Arpe Fernandez, Manuel
(86) International application number: PCT/CN2018/088240
(87) International publication number: WO 2019/169743

(56) References cited:
- CN-A- 104 935 464
- CN-A- 107 024 915
- CN-A- 107 248 927
- CN-A- 107 392 320
- CN-A- 107 479 836
- US-A1- 2010 318 837
- US-A1- 2010 318 837
- US-A1- 2016 124 787
- US-A1- 2016 323 163

## Description

### FIELD OF DISCLOSURE

The present disclosure generally relates to the field of Internet technology and, more particularly, relates to a method and system for detecting a server fault.

### BACKGROUND

With the continuous development of Internet technology, the number of servers in the network is also increasing. The performance of a server may directly affect the quality of the services it provides. When a server has a fault, the cause of the fault needs to be found out in time so that the fault can be fixedtimely.

Currently, servers usually have a fault alarm mechanism. When a server is abnormal, the server will issue an alarm notice. In this way, the server administrator mayinspect the server to find out which component has an anomaly.

However, as the number of servers continues to increase, if the faults on the servers are detected only by manual troubleshooting, a lot of human and material resources will be wasted, and the efficiency of fault detection is also low.

The document US2016/0323163 A1 describes a method and apparatus for detecting a fault condition in a network, making use of standard parameter data generated by a network termination device of a user of the network. The document US 2010/318837 A1 describes the use of a predictive failure model to generate a failure prediction associated with a node.

### BRIEF SUMMARY OF THE DISCLOSURE

The objective of the present disclosure is to provide a method and system for detecting a server fault, which can improve the efficiency of fault detection.

To achieve the above objective, in one aspect, the present disclosure provides a method for detecting a server fault. The method includes: collecting sample monitoring data of a plurality of servers, the sample monitoring data signifying operating states of the plurality of servers; analyzing the sample monitoring data to obtain a standard operating fault which is an operating fault reflected by the sample monitoring data; performing training, using a machine learning method based on the sample monitoring data, the standard operating fault and an initial detection mode, to obtain a fault detection model for the plurality of servers, wherein the initial detection model include an initialized neural network, and the neurons in the initialized neural network have initial parameter values; and collecting current monitoring data of a target server, and inputting the current monitoring data into the fault detection model to determine an operating fault corresponding to the current monitoring data.

To achieve the above objective, in another aspect, the present disclosure further provides a system for detecting a server fault. The system includes a data collecting unit, a data processing unit, and a fault detecting unit, where: the data collecting unit is configured to collect sample monitoring data of a plurality of servers, the sample monitoring data signifying operating states of the plurality of servers; the data processing unit includes a big data platform and a model training module, where the big data platform is configured to receive the sample monitoring data sent by the data collecting unit, and the model training module is configured to, analyze the sample monitoring data to obtain a standard operating fault which is an operating fault reflected by the sample monitoring data and using a machine learning method based on the sample monitoringdata, the standard operating fault and an initial detection mode, perform training to obtain a fault detection model for the plurality of servers, wherein the initial detection model include an initialized neural network, and the neurons in the initialized neural network have initial parameter values; and the fault detecting unit is configured to collect current monitoring data of a target server, and input the current monitoring data into the fault detection model to determine an operating fault corresponding to the current monitoring data.

As can be seen from the above, the technical solutions provided by the present disclosure may provide a machine learning method that is based on the sample monitoring data of multiple servers to perform training to obtain a fault detection model for the servers. Specifically, the sample monitoring data may include various aspects of server data, such as power supply data, temperature data, fan data, port data, network link data, system event data, and system service data. When determining a specific fault fora target server or predicting a fault of the target server, current monitoring data of the target server may be collected, and the current monitoring data is input into the fault detection model obtained through the training. Finally, the result output by the fault detection model may signify an operating fault corresponding to the current monitoring data. In real applications, for each type of monitoring data, a corresponding sub-model may be obtained through the training. In this way, for the input monitoring data, a matching sub-model may be selected for the fault detection, thereby improving the accuracy of fault detection. It can be seen from the above that the technical solutions provided by the present disclosure may save a lot of human and material resources, and may improve the efficiency of fault detection.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of a method for detecting a server fault according to some embodiments of the present disclosure;
FIG. 2 is a schematic diagram of an example of a system for detecting a server fault according to some embodiments of the present disclosure;

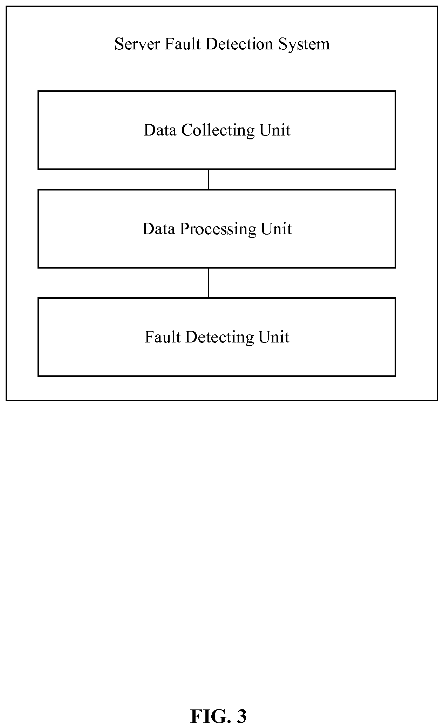

FIG. 3 is a schematic structural diagram of a system for detecting a server fault according to some embodiments of the present disclosure; and
FIG. 4 is a schematic structural diagram of a computer terminal according to some embodiments of the present disclosure.

### DETAILED DESCRIPTION

To make the objective, technical solutions, and advantages of the present disclosure clearer, the embodiments of the present disclosure will be made in detail hereinafter with reference to the accompanying drawings.

### Embodiment 1

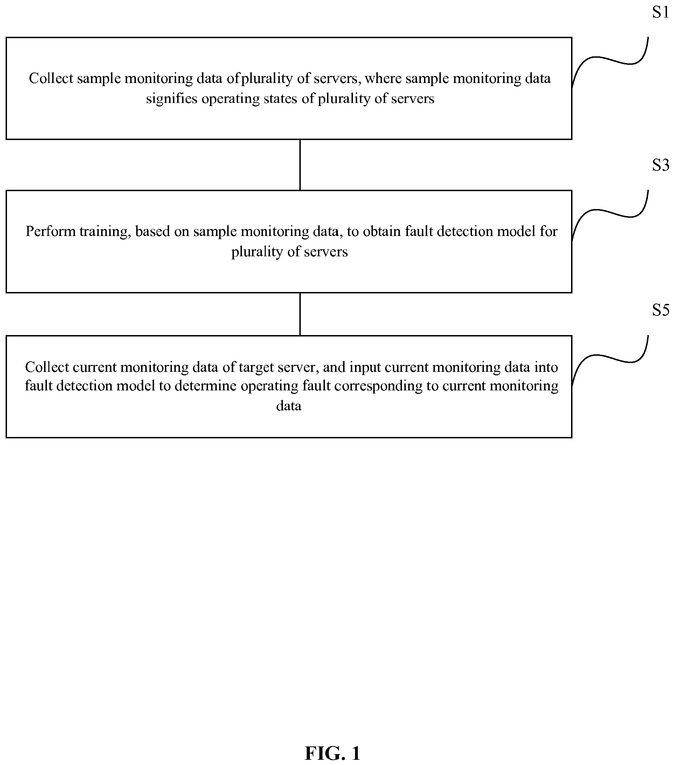

The present disclosure provides a method for detecting a server fault. Referring to FIG. 1, the method may include the following steps.

S1: collecting sample monitoring data from a plurality of servers, where the sample monitoring data signifies operating states of the plurality of servers.

In the disclosed embodiment, through predefined collection probes, monitoring data that signify the operating states of servers may be collected from a plurality of online servers. The monitoring data may include various aspects of data of the plurality of servers, such as CDM monitoring data, power supply data, temperature data, fan data, port data, network link data, system event data, and system service data. Here, the CDM monitoring data includes CPU (Central Processing Unit) monitoring data, DISK (hard drive) monitoring data, and MEMORY monitoring data. The foregoing data may reflect whether the servers are in normal operating states. After analyzing the data, operating fault(s) currently existed in the servers may be determined.

In the disclosed embodiment, the predefined collection probes may be preset collection devices. The collection devices may read the monitoring data from the servers through data transmission protocol(s) agreed with the servers. The monitoring data read by the collection devices may be used as sample monitoring data for machine learning. By learning a large amount of the sample monitoring data, various types of fault features may be analyzed.

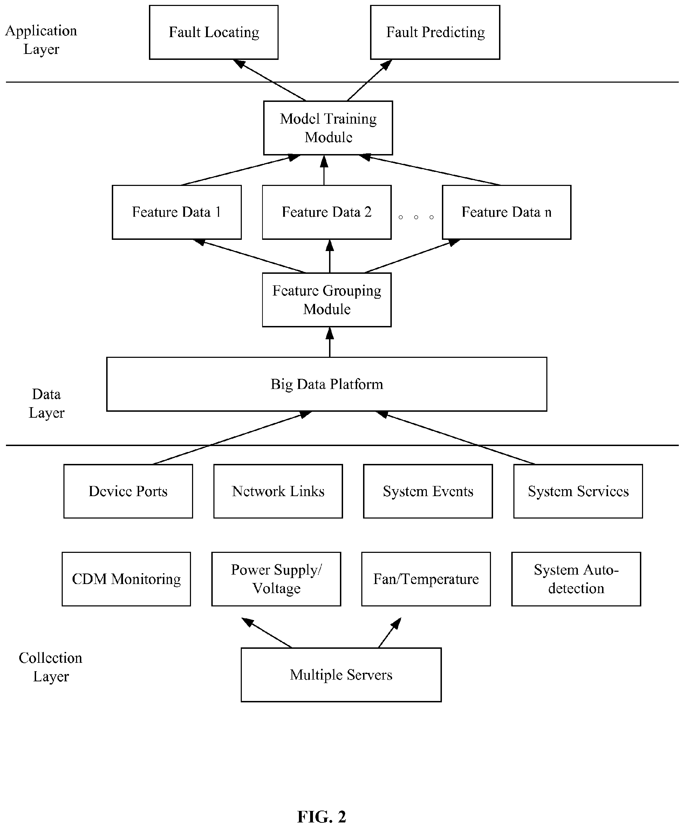

Referring to FIG. 2, in the disclosed embodiment, the process of collecting sample monitoring data may be implemented in a data collection layer. The data collection layer collects the sample monitoring data by collecting the data recorded on a Baseboard Management Controller (BMC) through an Intelligent Platform Management Interface (IPMI), formatting the collected data, and uploading the formatted data to a big data platform.

S3: performing training based on the sample monitoring data to obtain a fault detection model for the plurality of servers.

In the disclosed embodiment, after receiving the sample monitoring data uploaded by the collection layer, the big data platform may train a fault detection model using a machine learning method based on the sample monitoring data. In real applications, the collected sample monitoring data generally includes various types of monitoring data as described in Step S1. Here, each type of monitoring data may be used as a group of feature data, and thus the sample monitoring data may include multiple groups of feature data. For example, the sample monitoring data may be classified into a group of power supply feature data, a group of fan feature data, a group of memory feature data, and the like.

In one embodiment, in order to accurately locate a fault occurring in a server, the sample monitoring data may be grouped based on feature data and respectively trained to obtain a sub-model for each group of feature data. For example, for a group of power supply feature data, a power supply fault detection sub-model may be obtained through the training; and for a group of memory feature data, a memory fault detection sub-model may be obtained through the training. It should be noted that, in order to ensure a sub-model obtained through the training to be accurate, each group of feature data may include multiple pieces of feature data. The multiple pieces of feature data may be operating data of the same server at different time periods, or the operating data from different servers. For example, a group of memory feature data may include 1000 pieces of memory data collected from 100 servers.

In the disclosed embodiment, when performing a sub-model training for each group of feature data, each piece of feature data may be associated in advance with a standard operating fault, where the standard operating fault may be obtained through analyzing the feature data. Accordingly, an associated standard operating fault is an operating fault reflected by that piece of feature data. At the beginning of the training, the feature data may be input into an initial detection sub-model, to obtain a predicted operating fault for the feature data. Here, the initial detection sub-model may include an initialized neural network, and the neurons in the initialized neural network may have initial parameter values. Since the initial parameter values are set by default, the predicted operating fault resulted from processing the input feature data based on these initial parameter values may be not consistent with the standard operating fault that is actually reflected by the feature data. Accordingly, an error between the predicted operating fault and the standard operating fault may be determined. Specifically, the predicted result obtained by the initial detection sub-model may be a predicted probability array. The predicted probability array may include multiple probability values, where each probability value may correspond to one type of fault. For example, for a piece of memory feature data, the eventually obtained predicted probability array may include three probability values, and the three probability values respectively correspond to three types of fault related to the memory. Among these values, the higher the probability value, the greater the possibility that there is a corresponding type of fault. For example, if the predicted probability array is (0.1, 0.6, 0.3), then the type of fault corresponding to 0.6 may be the predicted operating fault. The standard probability array corresponding to the standard operating fault associated with the feature data may be, for example, (1, 0, 0), where the type of fault corresponding to the probability value 1 may be the standard operating fault. In this way, by subtracting the probability values of the predicted probability array from the corresponding probability values of the standard probability array, an error between the predicted operating fault and the standard operating fault may be determined. By inputting the error as a feedback value into the initial detection sub-model, the parameter values in the initial detection sub-model may be adjusted. After the adjustment, the feature data may be re-input into the adjusted detection sub-model. The process of error-based adjustment of the parameter values of the sub-model may be repeated, to allow the eventually predicted operating fault to be consistent with the standard operating fault. In this way, through the repeated training of a sub-model using a large amount of feature data in each group of feature data, the final sub-models obtained through the training may have a high prediction accuracy.

In one embodiment, the feature data may signify the operating state of a component in a server. For example, the CPU data may signify the operating state of a CPU. The feature data may also include a plurality of feature sub-data. The plurality of feature sub-data may respectively signify a state of each aspect of the component at running time. For example, the CPU data may include feature sub-data such as a CPU usage, a time-length of the CPU being used, a number of threads used by the CPU, etc. When the feature data is trained, a decision order of each feature sub-data in the feature data may be determined using a decision tree technique. According to the decision order, a feature value corresponding to each feature sub-data is determined. Here, the feature value is used to represent a specific value in the decision steps. For example, for the CPU data, the decision order determined based on the decision tree technique is to first determine the CPU usage, then determine the number of threads used by the CPU, and finally determine the time length of the CPU being used. Then, in each decision step, a value obtained by the decision may be considered as the above-mentioned feature value. For example, in the CPU usage decision step, the feature value may be 80%.

In the disclosed embodiment, based on the feature values determined by the decision, a predicted probability array corresponding to the feature data may be calculated. Specifically, the decision process may be performed by a neural network. The neurons in the neural network may perform a weighted summation or other non-linear calculations based on the feature value of each decision step to determine a final predicted probability array. The predicted probability array may include at least one probability value, where each primality value corresponds to a type of fault. For example, for the memory data, the predicted probability array finally determined from the prediction may include three probability values. The three probability values respectively correspond to three types of fault related to the memory. Eventually, the type of fault corresponding to the largest probability value in the predicted probability array may be determined as the predicted operating fault. For example, if the predicted probability array is (0.1, 0.6, 0.3), then the type of fault corresponding to 0.6 would be the predicted operating fault.

As shown in FIG. 2, in the disclosed embodiment, the training process of the fault prediction model may be implemented in a data layer. The data layer may include the big data platform described above, and may also include a feature grouping module and a model training module. Here, the feature grouping module is configured to group the sample monitoring data in the big data platform based on the feature data. The grouped feature data may be respectively trained in the model training module to obtain respective sub-models.

S5: collecting current monitoring data of a target server, and inputting the current monitoring data into the fault detection model to determine an operating fault corresponding to the current monitoring data.

In the disclosed embodiment, after performing training to obtain the fault detection model, current monitoring data of a target server may be collected, and the fault detection model obtained through the training may be used to perform fault detection on the current monitoring data. The target server may be a server to be examined. In the disclosed embodiment, the current monitoring data of the target server may also be collected using a preset collection probe. The current monitoring data may also include multiple groups of feature data. Accordingly, after collecting the current monitoring data of the target server, target feature data included in the current monitoring data may be identified. The target feature data is then input into a matching sub-model to determine an operating fault corresponding to the target feature data. In this way, for each group of feature data, a corresponding operating fault may be determined, which may then be pooled together to get each operating fault of the target servereventually.

As shown in FIG. 2, in the disclosed embodiment, the above-described fault detection process may be implemented in an application layer. In the application layer, in addition to locating a fault in a server that already has a fault, the server may be also periodically checked for an early sign of possible server fault(s), so that timely inspection and repair can be performed.

In one embodiment, the timing for collecting the current monitoring data of the target server may also have different options. In one aspect, the current monitoring data of the target server may be collected when the target server itself issues a fault notification message. The purpose of this processing is that the fault notification message sent by the target server usually includes relatively broad information. The message may only notify that the target server currently has a fault, but does not specify the specific type of the fault. At this point, in order to quickly screen a location of the fault, the current monitoring data may be collected, and the detailed fault information may be obtained using the fault detection model obtained through the training. In another aspect, the current monitoring data of the target server may also be periodically collected according to a specified time period. Each collected monitoring data is then detected for fault using the fault detection model obtained through the training. The purpose of this processing is to periodically perform a fault detection on the target server, so that it may be predicted whether there is a tendency that the target server will have a fault. This will allow the inspection and repair to be performed before a fault occurs.

In one embodiment, in order not to affect the normal network service of the target server, the target server may be detected for fault when the target server is idle. Specifically, a load distribution of the target server may be determined. The load distribution may include average loads of the target server within specified time periods. For example, an average load of the target server may be determined every three hours in a day. A target time period may then be determined based on the load distribution, and the fault detection may be performed on the target server within the target time period. Here, the average load within the target time period may be relatively low. Specifically, a specified time period corresponding to an average load less than or equal to a specified load threshold may be considered as the target time period. The specified load threshold may be set as, for example, 50%. Clearly, the specified load threshold may be flexibly adjusted based on the real situations. In actual applications, if the number of specified time periods corresponding to an average load less than or equal to the specified load threshold is at least two, then one of the specified time periods may be randomly selected as the target time period, or one of the specified time periods that has the lowest average load may be considered as the target time period. For example, after calculating the average loads of the target server every three hours in a day, it is found that that the time periods with an average load less than or equal to 50% fall in 0:00am-3:00am and 3:00am-6:00am. Either time period may then be considered as the target time period. Since the load of the target server is low during the target time period, the current running parameters of the target server may be collected and fault detection may be performed during this period without greatly affecting the performance of the target server.

In one embodiment, after determining an operating fault corresponding to the current monitoring data, a diagnostic strategy matching the operating fault may be invoked and applied to diagnose the fault of the target server. Here, the diagnosis strategy may be a strategy that is generalized based on the past diagnostic history. Each diagnosis strategy may be stored in association with a corresponding operating fault. In this way, after detecting an operating fault, the associated diagnostic strategy may be invoked for the detailed diagnosis. For example, the severity of the operating fault and the frequency of the operating fault may be diagnosed. Based on the result of the fault diagnosis, a detection cycle for the target server may be determined, and the target server may be periodically detected for fault based on the detection cycle. The detection cycle may be set according to the severity of the operating fault and the frequency of the fault. The more serious the operating fault, the higher the frequency of fault, the shorter the detection cycle may be. This may ensure an operating fault of the target server to be identified in time, so that the prevention and repair may be conducted before the fault occurs.

### Embodiment 2

The present disclosure further provides a system for detecting a server fault. The system includes a data collecting unit, a data processing unit, and a fault detecting unit, where:

the data collecting unit is configured to collect sample monitoring data of a plurality of servers, the sample monitoring data signifying operating states of the plurality of servers;

the data processing unit includes a big data platform and a model training module, where the big data platform is configured to receive the sample monitoring data sent by the data collecting unit, and the model training module is configured to, based on the sample monitoring data, perform training to obtain a fault detection model for the plurality of servers; and

the fault detecting unit is configured to collect current monitoring data of a target server, and input the current monitoring data into the fault detection model to determine an operating fault corresponding to the current monitoring data.

In one embodiment, the sample monitoring data includes a plurality of groups of feature data. Correspondingly, the data processing unit further includes:

a feature grouping module that is configured to group the sample monitoring data according to feature data, to allow the model training module to respectively perform training to obtain a sub-model for each group of feature data.

In one embodiment, the feature data is associated with a standard operating fault. Corresponding, the model training module further includes:
an initial prediction module that is configured to input the feature data into an initial detection sub-model to obtain a predicted operating fault of the feature data; and
an error correction module that is configured to determine an error between the predicted operating fault and the standard operating fault, and adjust parameters of the initial detection sub-model based on the error, to allow the predicted operating fault to be consistent with the standard operating fault after the feature data is re-input into the adjusted detection sub-model.

In one embodiment, the feature data includes a plurality of feature sub-data. Correspondingly, the initial prediction module further includes:
a decision order determining module that is configured to determine a decision order of each feature sub-data in the feature data, and respectively determine a feature value corresponding to each feature sub-data according to the decision order;
a probability array calculating module that is configured to calculate, according to the feature value, a predicted probability array corresponding to the feature data, where the predicted probability array includes at least one probability value, and each probability value corresponds to a type of fault; and
a fault determining module that is configured to determine a type of fault corresponding to the largest probability value in the predicted probability array as the predicted operating fault.

In one embodiment, the system further includes:
a load distribution calculating unit that is configured to calculate a load distribution of the target server, where the load distribution includes average loads of the target server within specified time periods; and
a periodic detection module that is configured to determine a target time period based on the load distribution, and perform a fault detection on the target server within the target time period.

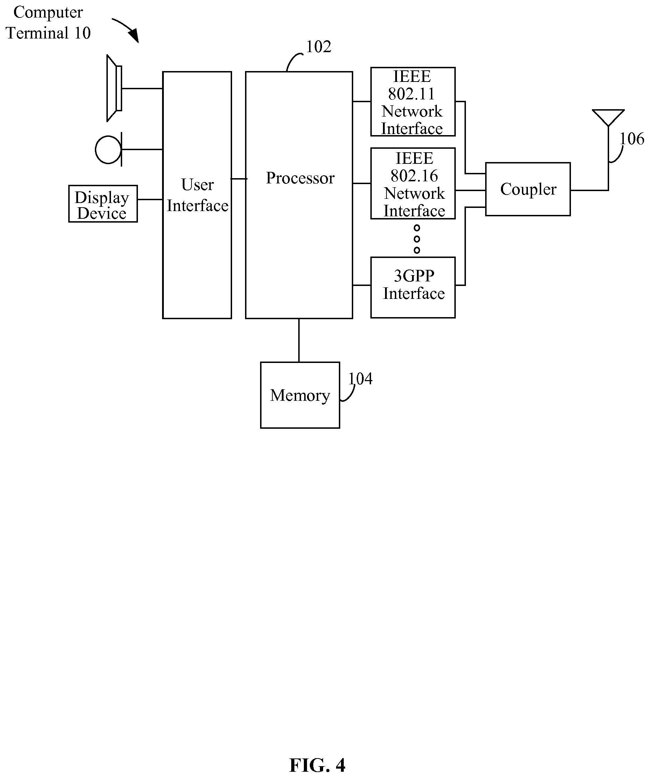

Referring to FIG. 4, in the present disclosure, the technical solutions of the disclosed embodiments may be applied to a computer terminal 10 shown in FIG. 4. The computer terminal 10 may include one or more (only one is shown in the figure) processors 102 (a processor 102 may include, but is not limited to, a processing device such as a microcontroller MCU or a programmable logic device FPGA), a memory 104 for storing data, and a transmission device 106 for communication purpose. It will be understood by those skilled in the art that the structure shown in FIG. 4 is provided by way of illustration, but not by way of limitation of the structures of the above-described electronic devices. For example, the computer terminal 10 may also include more or fewer components than those shown in FIG. 4, or have a different configuration than that shown in FIG. 4.

The memory 104 may be used to store software programs and modules of application software. The processor 102 implements various functional applications and data processing by executing software programs and modules stored in the memory 104. The memory 104 may include a high-speed random access memory, and also a non-volatile memory, such as one or more magnetic storage devices, flash memory, or other non-volatile solid-state memory. In some applications, the memory 104 may further include a memory remotely disposed with respect to the processor 102, which may be connected to the computer terminal 10 through a network. Examples of such network include, but are not limited to, the Internet, an intranet, a local area network, a mobile communication network, and combinations thereof.

Specifically, in the present disclosure, the above-described methods for detecting a server fault may be stored as a computer program in the above-described memory 104. The memory 104 may be coupled to the processor 102. Accordingly, when the processor 102 executes the computer program in the memory 104, each step in the above-described methods for detecting a server faultmay be implemented.

The transmission device 106 is configured to receive or transmit data via the network. The aforementioned specific examples of the network may include a wireless network provided by the communication provider of the computer terminal 10. In one application, the transmission device 106 includes a network interface controller (NIC) that may be connected to other network devices through the base stations to allow it to communicate with the Internet. In one application, the transmission device 106 may be a Radio Frequency (RF) module that is configured to communicate with the Internet via a wireless approach.

The BMC 108 functions as follows: when the collection layer collects sample monitoring data, the data recorded on the BMC may be collected through the IPMI, the collected data is formatted, and then uploaded to the big data platform.

As can be seen from the above, the technical solutions provided by the present disclosure may provide a machine learning method that is based on the sample monitoring data of multiple servers to perform training to obtain a fault detection model for the servers. Specifically, the sample monitoring data may include various aspects of server data, such as power supply data, temperature data, fan data, port data, network link data, system event data, and system service data. When determining a specific fault for a target server or predicting a fault of the target server, current monitoring data of the target server may be collected, and the current monitoring data is input into the fault detection model obtained through the training. Finally, the result output by the fault detection model may signify an operating fault corresponding to the current monitoring data. In real applications, for each type of monitoring data, a corresponding sub-model may be obtained through the training. In this way, for the input monitoring data, a matching sub-model may be selected for the fault detection, thereby improving the accuracy of fault detection. It can be seen from the above that the technical solutions provided by the present disclosure may save a lot of human and material resources, and may improve the efficiency of fault detection.

Through the foregoing description of the embodiments, it is clear to those skilled in the art that the various embodiments may take the form of a software plus a necessary general hardware platform implementation, and entirely a hardware implementation. In light of this understanding, the technical solutions, or essentially the parts that contribute to the current technology, may be embodied by way of a software product. The computer software product may be stored in a computer-readable storage medium, such as a ROM/RAM, a magnetic disc, an optical disc, etc., and include a variety of programs that cause a computing device (which may be a personal computer, a server, or a network device, etc.) to implement each embodiment or methods described in certain parts of each embodiment.

## Claims

1. A method for detecting a server fault, comprising:
collecting (S1) sample monitoring data of a plurality of servers, the sample monitoring data signifying operating states of the plurality of servers;
analyzing the sample monitoring data to obtain a standard operating fault which is an operating fault reflected by the sample monitoring data;
performing training (S3), using a machine learning method based on the sample monitoring data, the standard operating fault and an initial detection mode, to obtain a fault detection model for the plurality of servers, wherein the initial detection model includes an initialized neural network, and the neurons in the initialized neural network have initial parameter values; and
collecting (S5) current monitoring data of a target server, and inputting the current monitoring data into the fault detection model to determine an operating fault corresponding to the current monitoring data.

2. The method according to claim 1, wherein the sample monitoring data includes a plurality of groups of feature data, and performing training to obtain the fault detection model for the plurality of servers further includes:
grouping the sample monitoring data according to feature data, and respectively performing training to obtain a sub-model for each group of feature data.

3. The method according to claim 2, after collecting the current monitoring data of the target server, the method further includes:
identifying target feature data included in the current monitoring data, and inputting the target feature data into a matching sub-model to determine an operating fault corresponding to the target feature data.

4. The method according to claim 2, wherein the feature data is associated with a standard operating fault, and performing training to obtain a sub-model for each group of feature data further includes:
inputting the feature data into an initial detection sub-model to obtain a predicted operating fault of the feature data; and
determining an error between the predicted operating fault and the standard operating fault, and adjusting parameters of the initial detection sub-model based on the error, to allow the predicted operating fault to be consistent with the standard operating fault after the feature data is re-input into the adjusted detection sub-model.

5. The method according to claim 4, wherein the feature data includes a plurality of feature sub-data, and determining the predicted operating fault further includes:
determining a decision order of each feature sub-data in the feature data, and respectively determining a feature value corresponding to each feature sub-data according to the decision order;
calculating a predicted probability array corresponding to the feature data based on the feature value corresponding to each feature sub-data, wherein the predicted probability array includes at least one probability value, and each probability value corresponds to a type of fault; and
determining a type of fault corresponding to the largest probability value in the predicted probability array as the predicted operating fault.

6. The method according to claim 1, wherein collecting the current monitoring data of the target server further includes:
collecting the current monitoring data of the target server when the target server issues a fault notification message; or
collecting the current monitoring data of the target server according to a specified time cycle.

7. The method according to claim 1, further comprising:
calculating a load distribution of the target server, wherein the load distribution includes average loads of the target server within specified time periods; and
determining a target time period based on the load distribution, and performing a fault detection on the target server within the target time period.

8. The method according to claim 7, wherein determining the target time period based on the load distribution further includes:
determining a specified time period corresponding to an average load less than or equal to a specified load threshold as the target time period, and if the number of specified time periods corresponding to an average load less than or equal to the specified load threshold is at least two, randomly selecting one of the specified time periods as the target time period, or determining a specified time period corresponding to the lowest average load as the target time period.

9. The method according to claim 1, after determining the operating fault corresponding to the current monitoring data, the method further includes:
invoking a diagnostic strategy that matches the operating fault, and applying the diagnostics strategy to diagnose the operating fault of the target server; and
determining a detection cycle for the target server based on a result of the fault diagnosis, and periodically performing a fault detection on the target server based on the detection cycle.

10. A system for detecting a server fault, comprising a data collecting unit, a data processing unit, and a fault detecting unit, wherein:
the data collecting unit is configured to collect sample monitoring data of a plurality of servers, the sample monitoring data signifying operating states of the plurality of servers;
the data processing unit includes a big data platform and a model training module, wherein the big data platform is configured to receive the sample monitoring data sent by the data collecting unit, and the model training module is configured to analyze the sample monitoring data to obtain a standard operating fault which is an operating fault reflected by the sample monitoring data and, using a machine learning method based on the sample monitoring data, the standard operating fault and an initial detection mode, perform training to obtain a fault detection model for the plurality of servers, wherein the initial detection model includes an initialized neural network, and the neurons in the initialized neural network have initial parameter values; and
the fault detecting unit is configured to collect current monitoring data of a target server, and input the current monitoring data into the fault detection model to determine an operating fault corresponding to the current monitoring data.

11. The system according to claim 10, wherein the sample monitoring data includes a plurality of groups of feature data, and the data processing unit further includes:
a feature grouping module that is configured to group the sample monitoring data according to feature data, to allow the model training module to respectively perform training to obtain a sub-model for each group of feature data.

12. The system according to claim 11, wherein the feature data is associated with a standard operating fault, and the model training module further includes:
an initial prediction module that is configured to input the feature data into an initial detection sub-model to obtain a predicted operating fault of the feature data; and
an error correction module that is configured to determine an error between the predicted operating fault and the standard operating fault, and adjust parameters of the initial detection sub-model based on the error, to allow the predicted operating fault to be consistent with the standard operating fault after the feature data is re-input into the adjusted detection sub-model.

13. The system according to claim 12, wherein the feature data includes a plurality of feature sub-data, and the initial prediction module further includes:
a decision order determining module that is configured to determine a decision order of each feature sub-data in the feature data, and respectively determine a feature value corresponding to each feature sub-data according to the decision order;
a probability array calculating module that is configured to calculate, according to the feature value, a predicted probability array corresponding to the feature data, wherein the predicted probability array includes at least one probability value, and each probability value corresponds to a type of fault; and
a fault determining module that is configured to determine a type of fault corresponding to the largest probability value in the predicted probability array as the predicted operating fault.

14. The system according to claim 10, further comprising:
a load distribution calculating unit that is configured to calculate a load distribution of the target server, wherein the load distribution includes average loads of the target server within specified time periods; and
a periodic detection module that is configured to determine a target time period based on the load distribution, and perform a fault detection on the target server within the target time period.

## Patentansprüche

1. Eine Methode zur Entdeckung eines Serverfehlers, die Folgendes umfasst:
Sammeln (S1) von Probeüberwachungsdaten einer Vielzahl von Servern, wobei die Probeüberwachungsdaten Betriebszustände von einer Vielzahl von Servern bedeuten;
Analyse der Probeüberwachungsdaten zum Erhalt eines Standardbetriebsfehlers, der ein durch die Probeüberwachungsdaten reflektierter Betriebsfehler ist;
Durchführung (S3) eines Trainings mittels einer maschinellen Lernmethode basierend auf den Probeüberwachungsdaten, dem Standardbetriebsfehler und einem anfänglichen Entdeckungsmodus zwecks Erhalt eines Fehlerentdeckungsmodells für die Vielzahl von Servern, wobei das anfängliche Entdeckungsmodell ein initialisiertes, neuronales Netzwerk einschliesst, und die Neuronen in dem initialisierten, neuronalen Netzwerk anfängliche Parameterwerte aufweisen; und
Sammeln (S5) von aktuellen Überwachungsdaten eines Zielservers und Eingabe der aktuellen Überwachungsdaten in das Fehlerentdeckungsmodell zur Bestimmung eines den aktuellen Überwachungsdaten entsprechenden Betriebsfehlers.

2. Die Methode gemäss Anspruch 1, bei der die Probeüberwachungsdaten eine Vielzahl von Merkmaldaten einschliessen, und die Durchführung eines Trainings zum Erhalt des Fehlerentdeckungsmodells für die Vielzahl von Servern schliesst weiter Folgendes ein:
Gruppierung der Probeüberwachungsdaten übereinstimmend mit den Merkmaldaten, und dementsprechend Durchführung des Trainings zwecks Erhalt eines Untermodells für jede Gruppe von Merkmaldaten.

3. Die Methode gemäss Anspruch 2, nach dem Sammeln der aktuellen Überwachungsdaten des Zielservers schliesst die Methode noch Folgendes ein:
Identifizierung der in den aktuellen Überwachungsdaten eingeschlossenen Zielmerkmaldaten und Eingabe der Zielmerkmaldaten in ein passendes Untermodell zwecks Bestimmung eines den Zielmerkmaldaten entsprechenden Betriebsfehlers.

4. Die Methode gemäss Anspruch 2, bei der die Merkmaldaten einem Standardbetriebsfehler zugeordnet sind, und die Durchführung des Trainings zum Erhalt eines Untermodells für jede Gruppe von Merkmaldaten, schliesst noch Folgendes ein:
Eingabe der Merkmaldaten in ein anfängliches Entdeckungsuntermodell zum Erhalt eines vorausgesagten Betriebsfehlers der Merkmaldaten; und
Bestimmung einer Abweichung zwischen dem vorausgesagten Betriebsfehler und dem Standardbetriebsfehler und Anpassung der Parameter des anfänglichen Entdeckungsuntermodells basierend auf der Abweichung, damit der vorausgesagte Betriebsfehler mit dem Standardbetriebsfehler übereinstimmt, nachdem die Merkmaldaten erneut in das angepasste Entdeckungsuntermodell eingegeben wurde.

5. Die Methode gemäss Anspruch 4, bei der die Merkmaldaten eine Vielzahl von Merkmalsubdaten einschliessen und die Bestimmung des vorausgesagten Betriebsfehlers schliesst weiter Folgendes ein:
Bestimmung einer Entscheidungsordnung von allen Merkmalsubdaten in den Merkmaldaten und dementsprechende Bestimmung eines allen Merkmalsubdaten entsprechenden Merkmalwertes gemäss der Entscheidungsordnung;
Berechnung eines den Merkmaldaten entsprechenden, vorausgesagten Wahrscheinlichkeitfeldes basierend auf dem Merkmalwert, der allen Merkmalsubdaten entspricht, wobei das vorausgesagte Wahrscheinlichkeitfeld mindestens einen Wahrscheinlichkeitwert einschliesst und jeder Wahrscheinlichkeitswert einem Fehlertyp entspricht; und
Bestimmung eines Fehlertyps, der dem grössten Wahrscheinlichkeitwert in dem vorausgesagten Wahrscheinlichkeitsfeld entspricht, als vorausgesagter Betriebsfehler.

6. Die Methode gemäss Anspruch 1, bei der das Sammeln der aktuellen Überwachungsdaten des Zielservers Folgendes umfasst:
Sammeln der aktuellen Überwachungsdaten des Zielservers, wenn der Zielserver eine Fehlerbenachrichtigung herausgibt; oder
Sammeln der aktuellen Überwachungsdaten des Zielservers übereinstimmend mit einem spezifizierten Zeitzyklus.

7. Die Methode gemäss Anspruch 1, die weiter Folgendes umfasst:
Berechnung einer Lastverteilung des Zielservers, wobei die Lastverteilung durchschnittliche Lasten des Zielservers innerhalb eines spezifizierten Zeitraumes einschliesst; und
Bestimmung eines Zielzeitraums basierend auf der Lastverteilung und Durchführung einer Fehlerentdeckung im Zielserver innerhalb des Zielzeitraums.

8. Die Methode gemäss Anspruch 7, bei der die Bestimmung des Zielzeitraums basierend auf der Lastverteilung weiter Folgendes einschliesst:
Bestimmung eines spezifizierten Zeitraums entsprechend einer Durchschnittslast kleiner als eine oder gleich einer spezifizierten Lastschwelle als Zielzeitraum und, wenn die Anzahl von spezifizierten Zeiträumen entsprechend einer Durchschnittslast kleiner als die oder gleich der spezifizierten Lastschwelle mindestens zwei ist, willkürliches Wählen einersder spezifizierten Zeiträume als Zielzeitraum oder Bestimmung eines spezifizierten Zeitraums entsprechend der kleinsten Durchschnittslast als Zielzeitraum.

9. Die Methode gemäss Anspruch 1, nach der Bestimmung des den aktuellen Überwachungsdaten entsprechenden Betriebsfehlers, schliesst die Methode weiter Folgendes ein:
Aufruf einer dem Betriebsfehler entsprechenden Diagnosenstrategie und Anwendung der Diagnosenstrategie zur Diagnose des Betriebsfehlers des Zielservers, und
Bestimmung eines Entdeckungszyklus für den Zielserver basierend auf einem Ergebnis der Fehlerdiagnose und regelmässige Fehlerentdeckung im Zielserver basierend auf dem Entdeckungszyklus.

10. Ein System zur Entdeckung eines Serverfehlers, das eine Datensammlungeinheit, eine Datenverarbeitungseinheit und eine Fehlerentdeckungseinheit umfasst, wobei:
Die Datemsammlungseinheit so konfiguriert ist, dass sie Probeüberwachungsdaten einer Vielzahl von Servern sammelt, wobei Probeüberwachungsdaten Betriebszustände der Vielzahl von Servern bedeuten;
die Datenverarbeitungseinheit eine grosse Datenplattform und ein Modelltrainingmodul einschliesst, wobei die grosse Datenplattform so konfiguriert ist, dass sie die von der Datensammeleinheit gesandten Probeüberwachungsdaten empfängt, und das Modelltrainingmodul so konfiguriert ist, dass es die Probeüberwachungsdaten analysiert zwecks Erhalt eines Standardbetriebsfehlers, der ein in den Probeüberwachungsdaten reflektierter Betriebsfehler ist, und
Anwendung einer maschinellen Lernmethode basierend auf den Probeüberwachungsdaten, wobei der Standardbetriebsfehler und ein anfänglicher Entdeckungsmodus ein Training ausführen, um ein Fehlerentdeckungsmodell für die Vielzahl von Servern zu erhalten, wobei das anfängliche Entdeckungsmodell ein initialisiertes neuronales Netzwerk einschliesst und die Neuronen in dem initialisierten Netzwerk anfängliche Parameterwerte haben; und
die Fehlerentdeckungseinheit ist so konfiguriert, dass sie aktuelle Überwachungsdaten eines Zielservers sammelt und die aktuellen Überwachungsdaten in das Fehlerentdeckungsmodell eingibt zwecks Bestimmung eines den aktuellen Überwachungsdaten entsprechenden Betriebsfehlers.

11. Das System gemäss Anspruch 10, bei dem die Probeüberwachungsdaten eine Vielzahl von Merkmaldatengruppen einschliessen, und die Datenverarbeitungseinheit weiter Folgendes umfasst:
Ein Merkmalgruppierungsmodul, das so konfiguriert ist, dass es die Probeüberwachungsdaten übereinstimmend mit Merkmaldaten gruppiert, damit das Modelltrainingmodul entsprechend das Training durchführen kann, um ein Untermodell für jede Gruppe Merkmaldaten zu erhalten.

12. Das System gemäss Anspruch 11, bei dem die Merkmaldaten mit einem Standardbetriebsfehler verbunden werden, und das Modelltrainingmodul weiter Folgendes umfasst:
Ein anfängliches Voraussagemodul, das so konfiguriert ist, dass es die Merkmaldaten in ein anfängliches Entdeckungsuntermodell eingibt, um einen vorausgesagten Betriebsfehler der Merkmaldaten zu erhalten; und
Ein Abweichungskorrekturmodul, das so konfiguriert ist, dass es eine Abweichung zwischen dem vorausgesagten Betriebsfehler und dem Standardbetriebsfehler bestimmt und Parameter des anfänglichen Entdeckungsuntermodells basierend auf der Abweichung anpasst, damit der vorausgesagte Betriebsfehler mit dem Standardbetriebsfehler nach Wiedereingabe der Merkmaldaten in das angepasste Entdeckungsuntermodell übereinstimmen kann.

13. Das System gemäss Anspruch 12, bei dem die Merkmaldaten eine Vielzahl von Merkmalunterdaten einschliessen und das anfängliche Voraussagemodul weiter Folgendes umfasst:
Ein Bestimmungsmodul für eine Entscheidungsordnung, das so konfiguriert ist, dass es eine Entscheidungsordnung von allen Merkmalunterdaten in den Merkmaldaten bestimmt und dementsprechend einen allen Merkmalunterdaten entsprechenden Merkmalwert übereinstimmend mit der Entscheidungsordnung bestimmt;
ein Berechnungsmodul für Wahrscheinlichkeitsfelder, das so konfiguriert ist, dass es übereinstimmend mit dem Merkmalwert ein vorausgesagtes, den Merkmaldaten entsprechendes Wahrscheinlichkeitsfeld berechnet, wobei das vorausgesagte Wahrscheinlichkeitsfeld mindestens einen Wahrscheinlichkeitwert einschliesst und jeder Wahrscheinlichkeitswert einem Fehlertyp entspricht; und
ein Fehlerbestimmungsmodul, das so konfiguriert ist, dass es einen Fehlertyp entsprechend des grössten Wahrscheinlichkeitwertes in dem vorausgesagten Wahrscheinlichkeitsfeld als vorausgesagter Betriebsfehler bestimmt.

14. Das System gemäss Anspruch 10, das weiter Folgendes umfasst:
Eine Lastverteilungsberechnungseinheit, die so konfiguriert ist, dass sie eine Lastverteilung des Zielservers berechnet, wobei die Lastverteilung Durchschnittslasten des Zielservers innerhalb eines spezifizierten Zeitraums einschliesst; und
Ein Modul für regelmässige Entdeckung, das so konfiguriert ist, dass es einen Zielzeitraum basierend auf der Lastverteilung bestimmt und eine Fehlerentdeckung im Zielserver innerhalt des Zielzeitraums durchführt.

## Revendications

1. Une méthode de détection des défauts des serveurs, comprenant les pas (S) suivants:
collecter (S1) des données échantillons de contrôle d'une pluralité de serveurs, les données échantillons de contrôle indiquant les statuts de fonctionnement de la pluralité de serveurs;
analyser les données échantillons de contrôle pour obtenir un défaut de fonctionnement standard qui est un défaut standard reflété par les données échantillons de contrôle;
réaliser des exercices de formation (S3) en utilisant une méthode d'apprentissage par machine basée sur les données échantillons de contrôle, le défaut de fonctionnement standard et un mode de détection initiale, afin d'obtenir un modèle de détection des défauts pour la pluralité des serveurs ; où le modèle de détection initiale comprend un réseau neuronal initialisé, et les neurones du réseau de neurones initialisé ont des valeurs de paramètres initiaux; et
collecter (S5) des données de contrôle actuelles d'un serveur cible et saisir les données de contrôle actuelles dans le modèle de détection de défauts, pour déterminer le défaut de fonctionnement qui correspond aux données de contrôle actuelles.

2. La méthode conformément à la revendication 1, où les données échantillons de contrôle comprennent une pluralité de groupes de données fonctionnelles, et les exercices de formation pour obtenir le modèle de détection de défauts pour la pluralité de serveurs comprennent en outre les pas suivants:
grouper les données échantillons de contrôle conformément aux données fonctionnelles et, respectivement, réaliser les exercices de formation pour obtenir un sous-modèle pour chaque groupe de données fonctionnelles.

3. La méthode conformément à la revendication 2, après avoir effectué la collecte des données de contrôle actuelles du serveur cible, la méthode comprend en outre les pas suivants:
identifier des données fonctionnelles cibles incluses dans les données de contrôle actuelles, et saisir les données fonctionnelles cibles dans le sous-modèle correspondant afin de déterminer un défaut de fonctionnement relatif aux données fonctionnelles cibles.

4. La méthode conformément à la revendication 2, où les données fonctionnelles sont liées à un défaut de fonctionnement standard, et les exercices de formation pour obtenir un sous-modèle pour chaque groupe de données fonctionnelles comprend en outre les pas suivants:
saisir les données fonctionnelles dans un sous-modèle de détection initiale pour obtenir un défaut de fonctionnement prévu des données fonctionnelles ; et
déterminer l'erreur entre le défaut de fonctionnement prévu et le défaut de fonctionnement standard, et ajuster les paramètres du sous-modèle de détection initiale sur la base de l'erreur, pour permettre que le défaut de fonctionnement prévu soit cohérent avec le défaut de fonctionnement standards après avoir saisi de nouveau les données fonctionnelles dans le sous-modèle de détection ajusté.

5. La méthode conformément à la revendication 4, où les données fonctionnelles comprennent une pluralité de sous-données fonctionnelles, et la détermination du défaut de fonctionnement prévu comprend en outre les pas suivants:
déterminer un ordre de décision de chaque sous-donnée fonctionnelle dans les données fonctionnelles et, respectivement, déterminer une valeur fonctionnelle correspondant à chaque sous-donnée fonctionnelle conformément à l'ordre de décision;
calculer une série de probabilités prévues correspondant aux donnés fonctionnelles sur la base de la valeur fonctionnelle correspondant à chaque sous-donnée fonctionnelle, où la série de probabilités prévues comprend au moins une valeur de probabilité, et chaque valeur de probabilité correspond à un type de défaut; et
déterminer un type de défaut correspondant à la valeur de probabilité la plus grande de la série de probabilités prévues comme erreur de fonctionnement prévue.

6. La méthode conformément à la revendication 1, où la collecte des données de contrôle actuelles du serveur cible comprend en outre les pas suivants:
collecter les données de contrôle actuelles du serveur cible lorsque celui-ci émet un message de notification de défaut; ou
collecter les données de contrôle actuelles du serveur cible, conformément à un cycle de temps spécifié.

7. La méthode conformément à la revendication 1, comprenant en outre les pas suivants:
calculer une distribution de charges du serveur cible, où la distribution de charges comprend des charges moyennes du serveur cible au cours de périodes de temps spécifiées; et
déterminer une période de temps cible basée sur la distribution de charges, et réaliser une détection de défauts sur le serveur cible au cours de la période de temps cible.

8. La méthode conformément à la revendication 7, où la détermination de la période de temps cible, basée sur la distribution de charges, comprend en outre les pas suivants:
déterminer une période de temps spécifiée correspondant à une charge moyenne inférieure ou égale à un seuil de charge spécifié come période de temps cible; et si le nombre de périodes de temps spécifiées, correspondant à une charge moyenne inférieure ou égale au seuil de charge spécifié, est au moins 2, sélectionner, de manière aléatoire, l'une des périodes de temps spécifiées comme période de temps cible, ou déterminer une période de temps spécifiée correspondant à la charge moyenne la plus petite comme période de temps cible.

9. La méthode conformément à la revendication 1, après avoir déterminé le défaut de fonctionnement correspondant aux données de contrôle actuelles, la méthode comprend en outre les pas suivants:
invoquer une stratégie de diagnostic qui correspond au défaut de fonctionnement, et appliquer la stratégie de diagnostic pour diagnostiquer le défaut de fonctionnement du serveur cible; et
déterminer un cycle de détection pour le serveur cible, basé sur le résultat du diagnostic du défaut, et périodiquement effectuer une détection de défauts sur le serveur cible basée sur le cycle de détection.

10. Un système de détection de défauts du serveur, comprenant une unité de collecte de données, une unité de traitement de données et une unité de détection de défauts, où:
l'unité de collecte de données est configurée de manière à collecter les données échantillons de contrôle d'une pluralité de serveurs, les données échantillons de contrôle indiquant les statuts de fonctionnement de la pluralité de serveurs;
l'unité de traitement de données comprenant une plateforme d'un grand volume de données et un module de formation modèle, où la plateforme d'un grand volume de données est configurée pour recevoir les données échantillons de contrôle envoyées par l'unité de collecte de données, et le module de formation modèle est configuré pour analyser les données échantillons de contrôle pour obtenir un défaut de fonctionnement standard qui est un défaut de fonctionnement reflété par les données échantillons de contrôle, et
en utilisant une méthode d'apprentissage par machine basée sur les données échantillons de contrôle, le défaut de fonctionnement standard et un mode de détection initiale, effectuer un exercice de formation pour obtenir un modèle de détection de défauts pour la pluralité de serveurs où le modèle de détection initiale comprend un réseau neuronal initialisé, et les neurones du réseau de neurones initialisé ont des valeurs de paramètres initiaux; et
l'unité de détection de défauts est configurée pour collecter les données de contrôle actuelles d'un serveur cible, et saisir les données de contrôle actuelles dans le modèle de détection de défauts pour déterminer un défaut de fonctionnement correspondant aux données de contrôle actuelles.

11. Le système conformément à la revendication 10, où les données échantillons de contrôle comprennent une pluralité de groupes de données fonctionnelles, et l'unité de traitement de données comprend en outre:
un module de groupement de fonctions qui est configuré pour grouper les données échantillons de contrôle conformément aux données fonctionnelles, pour permettre au module de formation modèle effectuer respectivement les exercices de formation pour obtenir un sous-modèle pour chaque groupe de données fonctionnelles.

12. Le système conformément à la revendication 11, où les données fonctionnelles sont liées à un défaut de fonctionnement standard, et le module de formation modèle comprend en outre:
un module de prédiction initiale qui est configuré pour saisir les données fonctionnelles dans un sous-modèle de fonctionnement initial pour obtenir un défaut de fonctionnement prévu des données fonctionnelles; et
un module de correction d'erreurs qui est configuré pour déterminer une erreur entre le défaut de fonctionnement prévu et le défaut de fonctionnement standard, et ajuster les paramètres du sous-modèle de détection initiale en fonction de l'erreur, pour permettre que le défaut de fonctionnement prévu soit cohérent avec le défaut de fonctionnement standard après que les données fonctionnelles soient saisies de nouveau dans le sous-modèle de détection ajusté.

13. Le système conformément à la revendication 12, où les données fonctionnelles comprennent une pluralité de sous-données fonctionnelles, et le module de prédiction initiale comprend en outre:
un module de détermination d'ordres de décision qui est configuré pour déterminer un ordre de décision de chaque sous-donnée fonctionnelle dans les données fonctionnelles, et, respectivement, déterminer une valeur fonctionnelle correspondant à chaque sous-donnée fonctionnelle conformément à l'ordre de décision;
un module de calcul d'une série de probabilités qui est configuré pour calculer, à partir de la valeur fonctionnelle, une série de probabilités prévues correspondant aux données fonctionnelles, où la série de probabilités prévues comprend au moins une valeur de probabilité, et chaque valeur de probabilité correspond à un type de défaut; et
un module de détermination de défauts qui est configure pour déterminer un type de défaut correspondant à la plus grande valeur de probabilité de la série de probabilités prévues comme défaut de fonctionnement prévu.

14. Le système conformément à la revendication 10, comprenant en outre:
une unité de calcul de la distribution de charges qui est configurée pour calculer une distribution de charges sur le serveur cible, où la distribution de charges comprend des charges moyennes du serveur cible au cours de périodes de temps spécifiées; et
un module de détection périodique qui est configuré pour déterminer une période de temps cible en fonction de la distribution de charges, et effectuer une détection de défauts sur le serveur cible au cours de la période de temps cible.
